# EUROPEAN PATENT SPECIFICATION

(11) **EP 3 589 133 B1**
(45) Date of publication and mention of the grant of the patent: **24.02.2021**
(21) Application number: 18710561.4
(22) Date of filing: 28.02.2018
(51) Int. Cl.: A22C 29/02

(54) **APPARATUS AND METHOD FOR MECHANIZED PEELING OF SHRIMP**
VORRICHTUNG UND VERFAHREN ZUR MECHANISIERTEN SCHALENTFERNUNG BEI GARNELEN
APPAREIL ET PROCÉDÉ POUR LE DÉCORTICAGE MÉCANISÉ DE CREVETTES

(30) Priority: 02.03.2017 NL 2018456
(43) Date of publication of application: 08.01.2020
(73) Proprietor: Kant IE B.V., 9976 VN Lauwersoog (NL)
(72) Inventor: KANT, Klaas Berend, 9976 VN Lauwersoog (NL); KANT, Alfred, 9976 VN Lauwersoog (NL); KANT, Richard, 9976 VN Lauwersoog (NL)
(74) Representative: V.O.
(86) International application number: PCT/NL2018/050123
(87) International publication number: WO 2018/160062

(56) References cited:
- EP-A1- 0 654 426
- WO-A1-2010/082819
- DE-C- 597 667
- US-A- 3 310 832

## Description

The invention relates to an apparatus for mechanized peeling of shrimp according to the preamble of the appended independent claim 1. The invention further relates to a method for mechanized peeling of shrimp according to the preamble of the appended independent claim 12.

Hence, in such an apparatus and such a method the peeling of each shrimp takes place when the shrimp is embedded in-between a first shrimp contacting side of a first endless conveyor belt and a second shrimp contacting side of a second endless conveyor belt.

Such an apparatus and such a method are known from the embodiment of Figs. 3A, 3B of WO2010/082819A1. At page 7, lines 5-10 of WO2010/082819A1 it is described that the first and second conveyor belts 211, 212 shown in WO2010/082819A1 can consist of emery cloth.

A drawback of this apparatus and method known from WO2010/082819A1 is that emery cloth is not easily cleanable. Another drawback of this known apparatus and method is that the emery cloth is not always as effective in fully separating the armature and the meat of shrimp from one another. This diminished effectivity is for example noticeable when peeling thawed deepfrozen shrimp. The reason is that thawed deepfrozen shrimp are more difficult to peel as compared to fresh shrimp.

Another apparatus for processing shrimp is disclosed in United States patent publication US 3,310,832 A

An endless belt conveyor made of a plastic and which is provided with protruding teeth for the purpose of transporting fruit is described in EP 0 654 426 A1.

It is an object of the invention to obviate these drawbacks.

For that purpose, the invention provides an apparatus according to the appended independent claim 1, as well as a method according to the appended independent claim 12. More specific embodiments of the invention are set forth in the appended dependent claims 2-11.

Hence the invention provides an apparatus for mechanized peeling of shrimp, wherein such a shrimp is curved according to a substantially horseshoe-shape with a head and a tail at the respective free ends of the horseshoe-shape, with a back facing away from the head and the tail, and with an underside and an opposing topside each extending along the horseshoe-shape, comprising:
- a first endless conveyor belt and a second endless conveyor belt, which are configured for transporting the shrimp in a transport direction through a peeling zone of the appratus by simultaneously driving the first endless conveyor belt and the second endless conveyor belt in a peeling condition of the shrimp, while the shrimp is situated in an interspace in-between a first shrimp contacting side of the first endless conveyor belt and a second shrimp contacting side of the second endless conveyor belt, and while the first shrimp contacting side makes a first friction contact with the underside of the shrimp and the second shrimp contacting side makes a second friction contact with the topside of the shrimp; and
- squeezing means for realizing that in the peeling condition via the first shrimp contacting side and the second shrimp contacting side there is exerted a pressing force onto the shrimp situated in said interspace, wherein said pressing force moves in a squeezing direction, which crosses the transport direction, and which is extending from the head and the tail of the shrimp towards the back of the shrimp, so that the armature of the shrimp opens on the backside and the meat of the shrimp is squeezed out of the armature;
characterized in that
- the first endless conveyor belt at least at its first shrimp contacting side is made of a first flexible synthetic material and comprises a first pin bed of first pins, wherein the first flexible synthetic material has an elastic modulus lower than 5 GPa, and wherein the first pins are of metal, and wherein the first pins at least with their first free pin ends protrude at the first shrimp contacting side of the first endless conveyor belt, and wherein in said peeling condition multiple ones of the first free pin ends simultaneously are gripping at the underside of the shrimp for realizing said first friction contact; and/or
- the second endless conveyor belt at least at its second shrimp contacting side is made of a second flexible synthetic material and comprises a second pin bed of second pins, wherein the second flexible synthetic material has an elastic modulus lower than 5 GPa, and wherein the second pins are of metal, and wherein the second pins at least with their second free pin ends protrude at the second shrimp contacting side of the second endless conveyor belt, and wherein in said peeling condition multiple ones of the second free pin ends simultaneously are gripping at the topside of the shrimp for realizing said second friction contact.

Thanks to the flexible synthetic material at the shrimp contacting side(s) of the conveyor belt(s) in combination with the pin bed or the pin beds at the shrimp contacting side(s) concerned at which each shrimp is held, a more easily cleanable conveyor belt assembly is obtained in comparison with the emery cloth known from WO2010/082819A1, while at the same time a higher effectivity is obtained in separating the armature and the meat of the shrimp from one another. Various kinds of food grade flexible synthetic materials are possible in combination with various kinds of food grade materials of the pins of the pin bed.

It is noted that from EP2735234A1 another kind of shrimp peeling apparatus is known as compared to the shrimp peeling apparatus according to the preamble of the appended independent claim 1 of the present invention. For EP2735234A1 does not disclose an apparatus wherein the peeling of each shrimp takes place when the shrimp is embedded in-between two endless conveyor belts. Instead EP2735234A1 discloses in Fig. 1 an apparatus wherein the peeling of each shrimp takes place when the shrimp is being squeezed in-between an endless conveyor belt 3 and a roller 6. Therein, in EP2735234A1 the conveyor belt 3 is formed by metal plates 9 with protrusions 8 being integrally manufactured with the metal plates 9 by means of etching the metal plates. See EP2735234A1, para. [0020] line 8 "a roller", para. [0026] "metal sheets 9", para. [0008] "made from the belt-material", "integral with the belt", para. [0012] "metal sheets", "by etching". Hence, different from the present invention, EP2735234A1 neither discloses embedding each shrimp in-between two endless conveyor belts as according to the preamble of claim 1, nor discloses the flexible synthetic material according to the characterizing portion of claim 1, nor discloses the pin bed according to the characterizing portion of claim 1. The combination of these distinguishing characteristics of the present invention relative to EP2735234A1 are making the present invention applicable with a higher effectivity.

Various materials can be applied for the first flexible synthetic material and/or the second flexible synthetic material, such as for example polyurethane.

In a preferable embodiment the first flexible synthetic material of the first endless conveyor belt has an elastic modulus lower than 1 GPa, preferably lower than 0.5 GPa, more preferably lower than 0.1 GPa, and/or the second flexible synthetic material of the second endless conveyor belt has an elastic modulus lower than 1 GPa, preferably lower than 0.5 GPa, more preferably lower than 0.1 GPa. Such a low elastic modulus of the first and/or second flexible synthetic material provides the advantage that the first and/or second endless conveyor belt during the peeling of the shrimp automatically adapt continuously (and thereafter spring back again) to each individual shape of each individual shrimp, which each time promotes an as optimally possible peeling result for every individual shrimp.

In a further preferable embodiment the first pins are of corrosion resistant metal, and/or the second pins are of corrosion resistant metal.

In a yet further preferable embodiment the first free pin ends have first sharp parts with which the first free pin ends are gripping at the underside of the shrimp for realizing said first friction contact, and/or the second free pin ends have second sharp parts with which the second free pin ends are gripping at the topside of the shrimp for realizing said second friction contact. Highly effective embodiments of such sharp parts can be made in a highly efficient and accurate manner by grinding the first and/or second pins flat in a finishing step of the manufacturing process of the first and/or second conveyor belt.

In a yet further preferable embodiment the first free pin ends are free ends of first U-shaped clamps which are being clamped within the first flexible synthetic material of the first endless conveyor belt, and/or the second free pin ends are free ends of second U-shaped clamps which are being clamped within the second flexible synthetic material of the second endless conveyor belt. The application of such U-shaped clamps provides a reliable anchoring of the pins in the flexible synthetic material.

In a yet further preferable embodiment the squeezing means are adapted such that in the peeling condition of the shrimp the interspace in-between the first shrimp contacting side and the second shrimp contacting side in the transport direction is narrowing till a contact zone of the apparatus, wherein in the contact zone the first shrimp contacting side and the second shrimp contacting side are in contact with one another. Thanks to the narrowing of the interspace in the transport direction till said contact zone in which the first and second shrimp contacting sides are in contact with one another, the pressing force is automatically increased in a certain manner as each individual shrimp to be peeled comes closer to the contact zone. This each time promotes an as optimally possible peeling result for each individual shrimp.

In a yet further preferable embodiment:
- the first endless conveyor belt at least at its first shrimp contacting side is made of said first flexible synthetic material, and comprises said first pin bed of said first pins with their first free pin ends; and
- the second endless conveyor belt at least at its second shrimp contacting side is made of said second flexible synthetic material, and comprises said second pin bed of said second pins with their second free pin ends; and
- the first endless conveyor belt and the second endless conveyor belt additionally are configured such that, during said simultaneously driving the first endless conveyor belt and the second endless conveyor belt, in said contact zone multiple ones of the first free pin ends are simultaneously in contact with the second flexible synthetic material, while simultaneously multiple ones of the second free pin ends are simultaneously in contact with the first flexible synthetic material.

Thanks to this configuration wherein in said contact zone multiple ones of the first free pin ends simultaneously are in contact with the second flexible synthetic material, while simultaneously multiple ones of the second free pin ends simultaneously are in contact with the first flexible synthetic material, there is obtained a well-balanced distribution of the grip at the shrimp as provided by the first and second pin ends, which each time further promotes an as optimally possible peeling result for each individual shrimp.

In a yet further preferable embodiment the squeezing means comprises at least one squeezing element, wherein the at least one squeezing element is situated in the peeling zone on a side of one or each of the first and/or the second conveyor belt facing away from the interspace, for exerting, by pressing with a pressing area of the at least one squeezing element against the first conveyor belt and/or the second conveyor belt, via the first conveyor belt and/or the second conveyor belt said pressing force onto the shrimp being situated in said interspace.

In a yet further preferable embodiment, for realizing said pressing force moving in the squeezing direction, the pressing area of the at least one squeezing element at a side from which the shrimp are being supplied has a bordering edge of which at least a part is inclined relative to both the squeezing direction and the transport direction.

In a yet further preferable embodiment the apparatus further comprises positioning means which, prior to exerting said pressing force, position the shrimp to be peeled in such manner on the first endless conveyor belt that the back of the shrimp lies along a longitudinal edge of the first endless conveyor belt.

In a yet further preferable embodiment the apparatus further comprises at least one cutting station for applying an incision in the back of a shrimp to be peeled prior to exerting said pressing force.

The invention will now be further elucidated by means of, nonlimiting, examples referring to the schematic figures in the enclosed drawing, in which:
Fig. 1 shows in a cross-sectional side view an example of an embodiment of an apparatus according to the invention;
Fig. 2 shows the example of Fig. 1 in an upper view onto a part of a lower trajectory of the second endless conveyor belt of the apparatus concerned;
Fig. 3 shows the example of Fig. 1 in an upper view onto a part of an upper trajectory of the first endless conveyor belt of the apparatus concerned;
Fig. 4 shows a part of the cross-sectional side view of Fig. 1 in greater detail at the location of a contact zone in which the first shrimp contacting side of the first endless conveyor belt and the second shrimp contacting side of the second endless conveyor belt are in contact with one another; and
Fig. 5 shows a part of the cross-sectional side view of Fig. 4 in yet greater detail at the location of two first U-shaped clamps which are being clamped within the first flexible synthetic material of the first endless conveyor belt.

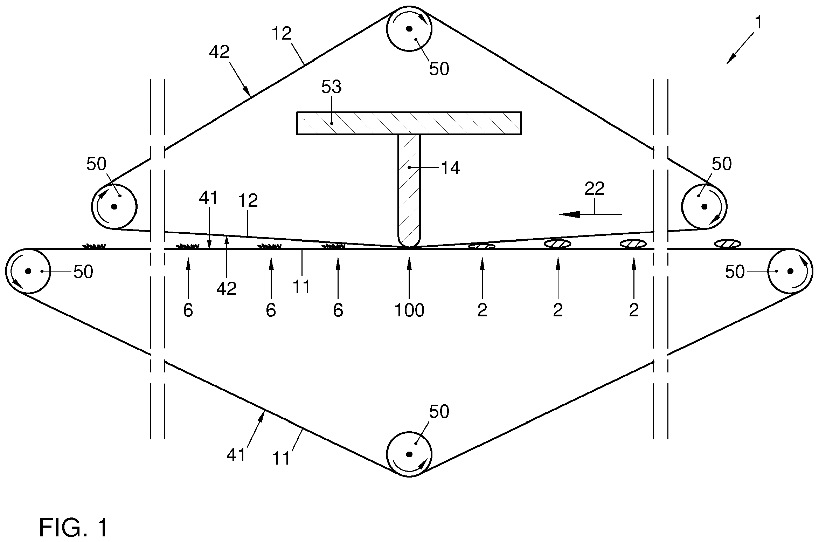

The reference signs used in Figs. 1-5 are referring to the abovementioned parts and aspects of the present invention, as well as to related parts and aspects, in the following manner.
- 1: apparatus
- 2: shrimp
- 3: head
- 4: tail
- 5: back
- 6: armature
- 7: meat
- 11: first endless conveyor belt
- 12: second endless conveyor belt
- 14: squeezing element
- 21: squeezing direction
- 22: transport direction
- 30: pressing area
- 31: bordering edge
- 41: first shrimp contacting side
- 42: second shrimp contacting side
- 50: return pulley
- 51: first pins
- 52: second pins
- 53: reference structure
- 60: cutting station
- 61: first free pin ends
- 62: second free pin ends
- 71: first U-shaped clamps
- 72: second U-shaped clamps
- 81: first flexible synthetic material
- 82: second flexible synthetic material
- 91: first additional flexible synthetic material
- 92: second additional flexible synthetic material
- 100: contact zone
- 101: first sharp parts

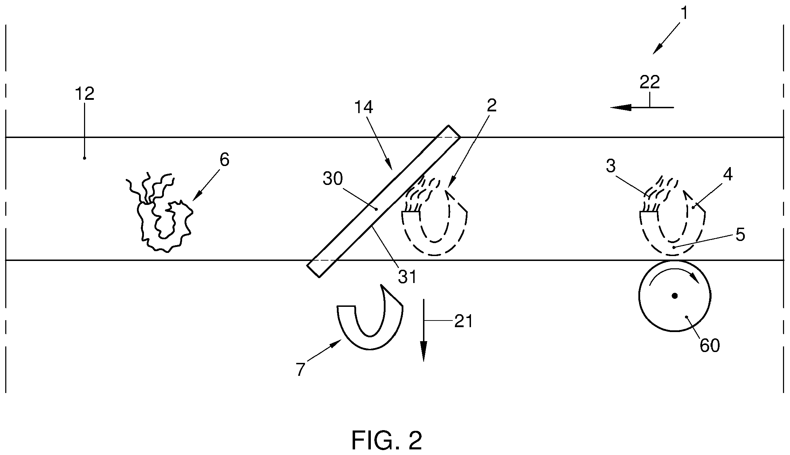

Figs. 1 and 2 show the apparatus 1 according to the invention. Figs. 1 and 2 also show a number of shrimp 2. Such a shrimp 2 is curved according to a substantially horseshoe-shape with a head 3 and a tail 4 at the respective free ends of the horseshoe-shape, with a back 5 facing away from the head and the tail, and with an underside and an opposing topside each extending along the horseshoe-shape. From EP0743010A1 it is known that, if onto such a shrimp 2 a pressing force is exerted which shifts from the head 3 and the tail 4 in the direction of the back 5, the meat 7 of the shrimp 2 can be squeezed out of the rings of the armature 6 without pushing-in or flattening the meat. Additionally it has appeared that this technique is suitable for shrimp of all types and dimensions.

The apparatus 1 comprises the first endless conveyor belt 11 with the first shrimp contacting side 41 and the second endless conveyor belt 12 with the second shrimp contacting side 42. The first conveyor belt 11 is mounted around return pulleys 50, wherein at least one of the pulleys, in operation, is driven. The second conveyor belt 12 is arranged above the conveyor belt 11 and is also mounted around return pulleys 50, of which one, in operation, is driven. Preferably the innercircumferences of the conveyor belts and the outercircumferences of the return pulleys are provided with mutually interlocking cam profiles. This enables the conveyor belts to be driven highly accurately, in position and in time for each conveyor belt, whereby inter alia also the time-dependent mutual position of the conveyor belts can be controlled accurately.

The bottom path of the upper second conveyor belt 12 lies directly above the top path of the lower first conveyor belt 11 and has the same transport direction 22 as the top path of the lower conveyor belt. In the shown example the lower first conveyor belt 11 is longer than the upper second conveyor belt 12, so that the lower first conveyor belt, at a supply side thereof, has a start section which is not yet overhung by the upper first conveyor belt 12. The start section offers the possibility to place the shrimp to be peeled in the desired position on the lower first conveyor belt 11.

The first and second conveyor belts 11, 12 are arranged for successively transporting the shrimp in the transport direction 22 through the peeling zone, with the shrimp 2 lyingly being held in-between mutually facing trajectories of the respective conveyor belts 11 and 12.

The squeezing means of apparatus 1 comprises the squeezing element 14 which is situated in the peeling zone at a side of the second conveyor belt 12 facing away from the interspace in-between the mutually facing trajectories, for exerting, via the second conveyor belt 12, said pressing force onto the shrimp 2 situated in said interspace. Exerting said pressing force is realized by pressing with a pressing area 30 of the squeezing element 14 against the moving second conveyor belt 12. For that purpose the squeezing element 14 is situated at a fixed position relative to the positions of the return pulleys 50 of the second conveyor belt 12. Such a fixed positioning of the squeezing element 14 is schematically indicated in Fig. 1 in that the squeezing element 14 is fixedly positioned relative to a reference structure 53 which is situated at a fixed position relative to the positions of the return pulleys 50 of the second conveyor belt 12.

As mentioned, Fig. 2 is an upper view at a part of a lower trajectory of the second endless conveyor belt 12. Fig. 2 shows two shrimp 2 and an armature 6 which are situated below the second endless conveyor belt 12. In Fig. 2 these two shrimp 2 and this armature 6 are shown fictitiously in through-sight, for in reality they are not visible through the second endless conveyor belt 12 (unless the conveyor belt 12 would be transparent).

In Fig. 2 it is seen that, for realizing said pressing force moving in the squeezing direction 21, the pressing area 30 of the squeezing element 14 at a side from which the shrimp 2 are being supplied has the bordering edge 31 which is inclined relative to both the squeezing direction 21 and the transport direction 22. The application of such a squeezing element 14 with such a pressing area 30 having such an inclined bordering edge 31 is a noncomplex manner to realize said moving pressing force.

At least for certain types of shrimp an improved peeling result can be obtained if, prior to the peeling action, the shrimp at the back sides are cut with an incision extending transverse to the rings of the armature 6. Then, the chance is reduced that parts of the armature 6 remain sticking to the meat 7. Schemetically and by way of example, Fig. 2 shows a rotating cutting member 60, which may for example be a little circular saw arranged next to the conveyor belts 11, 12 in a plane which is extending substantially parallel to the upper plane of the conveyor belt 11 and which can apply an incision to the shrimp at their back sides. A somewhat inclined orientation of the cutting member is also possible.

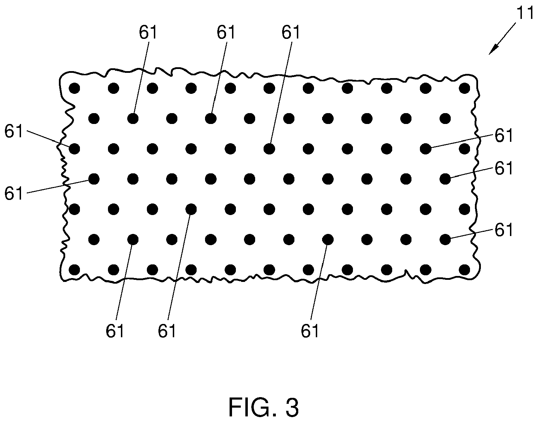

Figs. 3, 4, 5 show further details of the invention, especially in relation to the first and second flexible synthetic material 81, 82 and the first and second pin bed with the first and second pins 51, 52 which with their first and second free pin ends 61, 62 protrude at the first and second shrimp contacting sides 41, 42 of the first and second endless conveyor belts 11, 12.

It is remarked that in the shown example the first and second endless conveyor belts 11 and 12 have the same structure as regards material, pin bed and the like, but they can also have mutually different structure as regards material, pin bed and the like.

Fig. 3 shows an upper view onto a part of an upper trajectory of the first endless conveyor belt 11 of the apparatus 1, whereby Fig. 3 makes visible a pattern of the first free pin ends 61. The length by which the first free pin ends at the first shrimp contacting side 41 protrude can for example be chosen in a range of 0.05 mm to 1.5 mm, preferably in a range of 0.1 mm to 1 mm, such as for example 0.4 mm. In case the first pins 51 have a circular transverse cross-section, as in the shown example, the diameter of the first pins 51 can for example be chosen in a range of 0.05 mm to 1.5 mm, preferably in a range of 0.1 mm to 0.8 mm, such as for example 0.3 mm. In case the first pins 51 have a different kind of transverse cross-section, such as for example an arbitrary polygonal cross-section, the pins can be chosen with a transverse cross-sectional surface area corresponding to the transverse cross-sectional surface areas corresponding to the abovementioned ranges of the diameter. The shortest mutual distance between two first pins 51 lying next to one another can for example be chosen in a range of 0.2 mm to 10 mm, preferably in a range of 0.5 mm to 8 mm, more preferably in a range of 1 mm to 5 mm, such as for example 3 mm.

All abovementioned ranges and values of the abovementioned length, diameter, transverse cross-sectional surface area, and shortest mutual distance are suitable for the peeling of the shrimp species crangon crangon, also called "Hollandse garnaal". When peeling larger or smaller shrimp species than the crangon crangon, all abovementioned numbers of the abovementioned ranges and values can be adapted in proportion to the size ratio of the larger or smaller shrimp species concerned, on the one hand, and the crangon crangon, on the other hand.

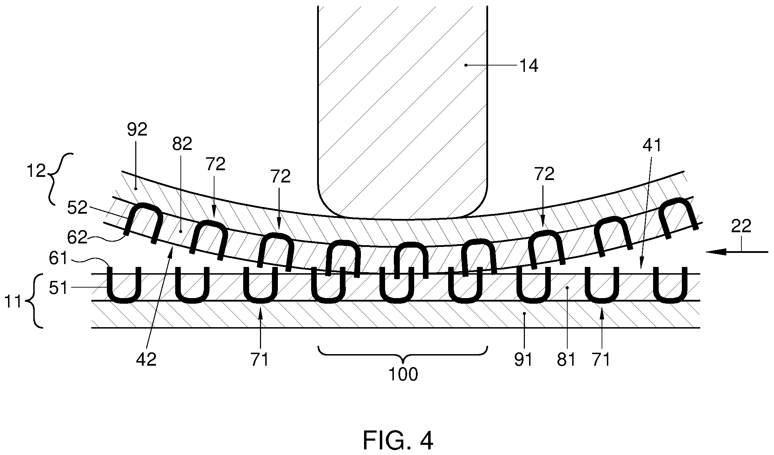

Fig. 4 shows a part of the cross-sectional side view of Fig. 1 in greater detail, more specifically near the contact zone 100 in which the first shrimp contacting side 41 of the first endless conveyor belt 11 and the second shrimp contacting side 42 of the second endless conveyor belt 12 are in contact with one another. Fig. 4 illustrates the abovementioned preferable embodiments of the invention, wherein the first endless conveyor belt 11 and the second endless conveyor belt 12 are configureerd such that during the simultaneously driving the first endless conveyor belt 11 and the second endless conveyor belt 12 in the contact zone 100 multiple ones of the first free pin ends 61 are simultaneously in contact with the second flexible synthetic material 82, while simultaneously multiple ones of the second free pin ends 62 are simultaneously in contact with the first flexible synthetic material 81. From Fig. 4 it can be derived that the pin ends 61, 62 concerned during the simultaneously driving the endless conveyor belts 11, 12 intermittently are pushing in the flexible synthetic materials 81, 82, and get loose therefrom again. In dependence of the material characteristics, such as the elasticity, of the materials 81, 82 the materials can more or less spring back after said getting loose from the pin ends 61, 62 concerned. Optionally the respective materials 81, 82 can be provided with pre-fabricated receiving openings for receiving the respective pin ends 62, 61.

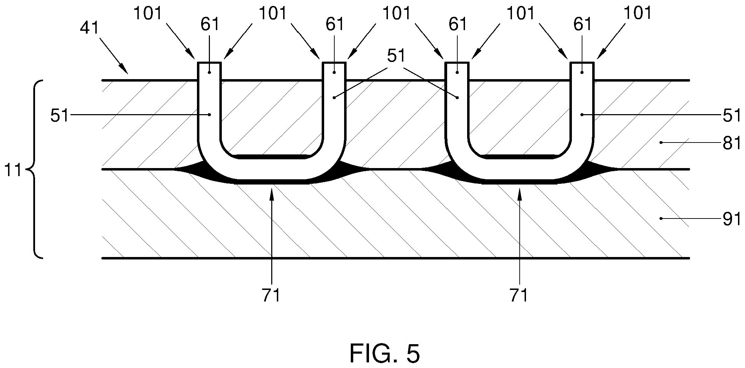

Fig. 5 shows a part of the cross-sectional side view of Fig. 4 in yet greater detail, more specifically at the location of two first U-shaped clamps 71 which are clamped within the first flexible synthetic material 81 of the first endless conveyor belt 11. Fig. 5 shows the abovementioned first sharp parts 101 of the first free pin ends 61. These first sharp parts 101 can be made in a highly efficient and accurate manner by grinding the first pins 51 flat in a finishing step of the manufacturing process of the first conveyor belt 11. Fig. 5 further shows that a first additional flexible synthetic material 91 is fixed to the first flexible synthetic material 81, for example by glueing, heat-contact welding, or otherwise. This provides inter alia an anchoring of the first U-shaped clamps 71 which are being clamped within the first flexible synthetic material 81 of the first endless conveyor belt 11. The first additional flexible synthetic material 91 can be the same material as the first flexible synthetic material 81, but can also be another material, for example a material with another, for example higher, elastic modulus than the elastic modulus of the first flexible synthetic material 81. Analogously Fig. 4 shows a similar second additional flexible synthetic material 92 which is glued to the second flexible synthetic material 82.

## Claims

1. Apparatus (1) for mechanized peeling of shrimp, wherein such a shrimp (2) is curved according to a substantially horseshoe-shape with a head (3) and a tail (4) at the respective free ends of the horseshoe-shape, with a back (5) facing away from the head and the tail, and with an underside and an opposing topside each extending along the horseshoe-shape, comprising:
- a first endless conveyor belt (11) and a second endless conveyor belt (12), which are configured for transporting the shrimp in a transport direction (22) through a peeling zone of the appratus by simultaneously driving the first endless conveyor belt and the second endless conveyor belt in a peeling condition of the shrimp, while the shrimp is situated in an interspace in-between a first shrimp contacting side (41) of the first endless conveyor belt and a second shrimp contacting side (42) of the second endless conveyor belt, and while the first shrimp contacting side makes a first friction contact with the underside of the shrimp and the second shrimp contacting side makes a second friction contact with the topside of the shrimp; and
- squeezing means (14) for realizing that in the peeling condition via the first shrimp contacting side and the second shrimp contacting side there is exerted a pressing force onto the shrimp situated in said interspace, wherein said pressing force moves in a squeezing direction (21), which crosses the transport direction (22), and which is extending from the head and the tail of the shrimp towards the back of the shrimp, so that the armature (6) of the shrimp opens on the backside and the meat (7) of the shrimp is squeezed out of the armature;
**characterized in that**
- the first endless conveyor belt (11) at least at its first shrimp contacting side (41) is made of a first flexible synthetic material (81) and comprises a first pin bed of first pins (51), wherein the first flexible synthetic material (81) has an elastic modulus lower than 5 GPa, and wherein the first pins (51) are of metal, and wherein the first pins (51) at least with their first free pin ends (61) protrude at the first shrimp contacting side of the first endless conveyor belt, and wherein in said peeling condition multiple ones of the first free pin ends simultaneously are gripping at the underside of the shrimp for realizing said first friction contact; and/or
- the second endless conveyor belt (12) at least at its second shrimp contacting side (42) is made of a second flexible synthetic material (82) and comprises a second pin bed of second pins (52), wherein the second flexible synthetic material (82) has an elastic modulus lower than 5 GPa, and wherein the second pins (52) are of metal, and wherein the second pins (52) at least with their second free pin ends (62) protrude at the second shrimp contacting side of the second endless conveyor belt, and wherein in said peeling condition multiple ones of the second free pin ends simultaneously are gripping at the topside of the shrimp for realizing said second friction contact.

2. Apparatus according to claim 1, wherein the first flexible synthetic material (81) of the first endless conveyor belt (11) has an elastic modulus lower than 1 GPa, preferably lower than 0.5 GPa, more preferably lower than 0.1 GPa, and/or wherein the second flexible synthetic material (82) of the second endless conveyor belt (12) has an elastic modulus lower than 1 GPa, preferably lower than 0.5 GPa, more preferably lower than 0.1 GPa.

3. Apparatus according to claim 1 or 2, wherein the first pins (51) are of corrosion resistant metal, and/or wherein the second pins (52) are of corrosion resistant metal.

4. Apparatus according to any one of the preceding claims, wherein the first free pin ends (61) have first sharp parts (101) with which the first free pin ends are gripping at the underside of the shrimp for realizing said first friction contact, and/or wherein the second free pin ends (62) have second sharp parts with which the second free pin ends are gripping at the topside of the shrimp for realizing said second friction contact.

5. Apparatus according to any one of the preceding claims, wherein the first free pin ends (61) are free ends of first U-shaped clamps (71) which are being clamped within the first flexible synthetic material (81) of the first endless conveyor belt (11), and/or wherein the second free pin ends (62) are free ends of second U-shaped clamps (72) which are being clamped within the second flexible synthetic material (82) of the second endless conveyor belt (12).

6. Apparatus according to any one of the preceding claims, wherein the squeezing means (14) are adapted such that in the peeling condition of the shrimp the interspace in-between the first shrimp contacting side (41) and the second shrimp contacting side (42) in the transport direction (22) is narrowing till a contact zone (100) of the apparatus (1), wherein in the contact zone the first shrimp contacting side and the second shrimp contacting side are in contact with one another.

7. Apparatus according to claim 6, wherein:
- the first endless conveyor belt (11) at least at its first shrimp contacting side (41) is made of said first flexible synthetic material (81), and comprises said first pin bed of said first pins (51) with their first free pin ends (61); and
- the second endless conveyor belt (12) at least at its second shrimp contacting side (42) is made of said second flexible synthetic material (82), and comprises said second pin bed of said second pins (52) with their second free pin ends (62); and
- the first endless conveyor belt (11) and the second endless conveyor belt (12) additionally are configured such that, during said simultaneously driving the first endless conveyor belt (11) and the second endless conveyor belt (12), in said contact zone (100) multiple ones of the first free pin ends (61) are simultaneously in contact with the second flexible synthetic material (82), while simultaneously multiple ones of the second free pin ends (62) are simultaneously in contact with the first flexible synthetic material (81).

8. Apparatus according to any one of the preceding claims, wherein the squeezing means comprises at least one squeezing element (14), wherein the at least one squeezing element is situated in the peeling zone on a side of one or each of the first and/or the second conveyor belt (11, 12) facing away from the interspace, for exerting, by pressing with a pressing area (30) of the at least one squeezing element (14) against the first conveyor belt (11) and/or the second conveyor belt (12), via the first conveyor belt and/or the second conveyor belt said pressing force onto the shrimp (2) being situated in said interspace.

9. Apparatus according to claim 8, wherein, for realizing said pressing force moving in the squeezing direction (21), the pressing area (30) of the at least one squeezing element (14) at a side from which the shrimp (2) are being supplied has a bordering edge (31) of which at least a part is inclined relative to both the squeezing direction (21) and the transport direction (22).

10. Apparatus according to any one of the preceding claims, further comprising positioning means which, prior to exerting said pressing force, position the shrimp (2) to be peeled in such manner on the first endless conveyor belt (11) that the back (5) of the shrimp lies along a longitudinal edge of the first endless conveyor belt.

11. Apparatus according to any one of the preceding claims, further comprising at least one cutting station (60) for applying an incision in the back (5) of a shrimp (2) to be peeled prior to exerting said pressing force.

12. Method for mechanized peeling of shrimp, wherein such a shrimp (2) is curved according to a substantially horseshoe-shape with a head (3) and a tail (4) at the respective free ends of the horseshoe-shape, with a back (5) facing away from the head and the tail, and with an underside and an opposing topside each extending along the horseshoe-shape, and wherein a driven first endless conveyor belt (11) and a second endless conveyor belt (12), simultaneously driven therewith, are transporting the shrimp in a transport direction (22) through a peeling zone of an apparatus, while:
- the shrimp is situated in an interspace in-between a first shrimp contacting side (41) of the first endless conveyor belt and a second shrimp contacting side (42) of the second endless conveyor belt;
- the first shrimp contacting side makes a first friction contact with the underside of the shrimp and the second shrimp contacting side makes a second friction contact with the topside of the shrimp;
- squeezing means (14) via the first shrimp contacting side and the second shrimp contacting side are exerting a pressing force onto the shrimp situated in said interspace, wherein said pressing force moves in a squeezing direction (21), which crosses the transport direction (22), and which is extending from the head and the tail of the shrimp towards the back of the shrimp, so that the armature (6) of the shrimp opens on the backside and the meat (7) of the shrimp is squeezed out of the armature;
**characterized in that**
- the first endless conveyor belt (11) at least at its first shrimp contacting side (41) is made of a first flexible synthetic material (81) and comprises a first pin bed of first pins (51), wherein the first flexible synthetic material (81) has an elastic modulus lower than 5 GPa, and wherein the first pins (51) are of metal, and wherein the first pins (51) at least with their first free pin ends (61) protrude at the first shrimp contacting side of the first endless conveyor belt, and wherein in said peeling condition multiple ones of the first free pin ends simultaneously are gripping at the underside of the shrimp; and/or
- the second endless conveyor belt (12) at least at its second shrimp contacting side (42) is made of a second flexible synthetic material (82) and comprises a second pin bed of second pins (52), wherein the second flexible synthetic material (82) has an elastic modulus lower than 5 GPa, and wherein the second pins (52) are of metal, and wherein the second pins (52) at least with their second free pin ends (62) protrude at the second shrimp contacting side of the second endless conveyor belt, and wherein in said peeling condition multiple ones of the second free pin ends simultaneously are gripping at the topside of the shrimp.

## Patentansprüche

1. Vorrichtung (1) zum mechanisierten Schälen von Garnelen, wobei eine solche Garnele (2) im Wesentlichen hufeisenförmig mit einem Kopf (3) und einem Schwanz (4) an den jeweiligen freien Enden der Hufeisenform gekrümmt ist, mit einem Rücken (5), der vom Kopf und vom Schwanz weg zeigt, und mit einer Unterseite und einer gegenüberliegenden Oberseite, die sich jeweils entlang der Hufeisenform erstrecken, umfassend:
- ein erstes endloses Förderband (11) und ein zweites endloses Förderband (12), die zum Transportieren der Garnelen in einer Transportrichtung (22) durch eine Schälzone der Vorrichtung konfiguriert sind, indem gleichzeitig das erste endlose Förderband und das zweite endlose Förderband in einem Schälzustand der Garnele angetrieben wird, während sich die Garnele in einem Zwischenraum zwischen einer ersten Garnelenkontaktseite (41) des ersten endlosen Förderbandes und einer zweiten Garnelenkontaktseite (42) des zweiten endlosen Förderbandes befindet, und während die erste Garnelenkontaktseite einen ersten Reibungskontakt mit der Unterseite der Garnele herstellt und die zweite Garnelenkontaktseite einen zweiten Reibungskontakt mit der Oberseite der Garnele herstellt; und
- Quetschmittel (14) zum Realisieren, dass im Schälzustand über die erste Garnelenkontaktseite und die zweite Garnelenkontaktseite eine Druckkraft auf die in dem Zwischenraum befindliche Garnele ausgeübt wird, wobei sich die Druckkraft in einer Quetschrichtung (21) bewegt, die die Transportrichtung (22) kreuzt und sich vom Kopf und Schwanz der Garnele in Richtung des Rückens der Garnele erstreckt, so dass sich der Panzer (6) der Garnele auf der Rückseite öffnet und das Fleisch (7) der Garnele aus dem Panzer herausgequetscht wird;
**dadurch gekennzeichnet, dass**
- das erste endlose Förderband (11) wenigstens an seiner ersten Garnelenkontaktseite (41) aus einem ersten flexiblen Kunststoffmaterial (81) besteht und ein erstes Stiftbett aus ersten Stiften (51) umfasst, wobei das erste flexible Kunststoffmaterial (81) einen Elastizitätsmodul von weniger als 5 GPa aufweist, und wobei die ersten Stifte (51) aus Metall sind und wobei die ersten Stifte (51) wenigstens mit ihren ersten freien Stiftenden (61) an der ersten Garnelenkontaktseite des ersten endlosen Förderbandes hervorstehen, und wobei in dem Schälzustand mehrere der ersten freien Stiftenden gleichzeitig an der Unterseite der Garnele greifen, um den ersten Reibungskontakt zu realisieren; und/oder
- das zweite endlose Förderband (12) wenigstens an seiner zweiten Garnelenkontaktseite (42) aus einem zweiten flexiblen Kunststoffmaterial (82) besteht und ein zweites Stiftbett aus zweiten Stiften (52) umfasst, wobei das zweite flexible Kunststoffmaterial (82) einen Elastizitätsmodul von weniger als 5 GPa aufweist und wobei die zweiten Stifte (52) aus Metall sind und wobei die zweiten Stifte (52) wenigstens mit ihren zweiten freien Stiftenden (62) an der zweiten Garnelenkontaktseite des zweiten endlosen Förderbandes hervorstehen, und wobei in dem Schälzustand mehrere der zweiten freien Stiftenden gleichzeitig an der Oberseite der Garnele greifen, um den zweiten Reibungskontakt zu realisieren.

2. Vorrichtung nach Anspruch 1, wobei das erste flexible Kunststoffmaterial (81) des ersten endlosen Förderbandes (11) einen Elastizitätsmodul von weniger als 1 GPa, vorzugsweise weniger als 0,5 GPa, bevorzugter weniger als 0,1 GPa aufweist und/oder wobei das zweite flexible Kunststoffmaterial (82) des zweiten endlosen Förderbandes (12) einen Elastizitätsmodul von weniger als 1 GPa, vorzugsweise weniger als 0,5 GPa, bevorzugter weniger als 0,1 GPa aufweist.

3. Vorrichtung nach Anspruch 1 oder 2, wobei die ersten Stifte (51) aus korrosionsbeständigem Metall sind und/oder wobei die zweiten Stifte (52) aus korrosionsbeständigem Metall sind.

4. Vorrichtung nach einem der vorhergehenden Ansprüche, wobei die ersten freien Stiftenden (61) erste scharfe Teile (101) aufweisen, mit denen die ersten freien Stiftenden an der Unterseite der Garnele greifen, um den ersten Reibungskontakt zu realisieren, und/oder wobei die zweiten freien Stiftenden (62) zweite scharfe Teile aufweisen, mit denen die zweiten freien Stiftenden an der Oberseite der Garnele greifen, um den zweiten Reibungskontakt zu realisieren.

5. Vorrichtung nach einem der vorhergehenden Ansprüche, wobei die ersten freien Stiftenden (61) freie Enden der ersten U-förmigen Klemmen (71) sind, die in dem ersten flexiblen Kunststoffmaterial (81) des ersten endlosen Förderbandes (11) geklemmt werden und/oder wobei die zweiten freien Stiftenden (62) freie Enden von zweiten U-förmigen Klemmen (72) sind, die in das zweite flexible Kunststoffmaterial (82) des zweiten endlosen Förderbandes (12) geklemmt werden.

6. Vorrichtung nach einem der vorhergehenden Ansprüche, wobei die Quetschmittel (14) so angepasst sind, dass sich der Zwischenraum zwischen der ersten Garnelenkontaktseite (41) und der zweiten Garnelenkontaktseite (42) in Transportrichtung (22) bis zu einer Kontaktzone (100) der Vorrichtung (1) im Schälzustand der Garnele verengt, wobei in der Kontaktzone die erste Garnelenkontaktseite und die zweite Garnelenkontaktseite miteinander in Kontakt stehen.

7. Vorrichtung nach Anspruch 6, wobei:
- das erste endlose Förderband (11) wenigstens an seiner ersten Garnelenkontaktseite (41) aus dem ersten flexiblen Kunststoffmaterial (81) besteht und das erste Stiftbett der ersten Stifte (51) mit ihren ersten freien Stiftenden (61) umfasst; und
- das zweite endlose Förderband (12) wenigstens an seiner zweiten Garnelenkontaktseite (42) aus dem zweiten flexiblen Kunststoffmaterial (82) besteht und das zweite Stiftbett der zweiten Stifte (52) mit ihrem zweiten freien Stiftenden (62) umfasst; und
- das erste endlose Förderband (11) und das zweite endlose Förderband (12) zusätzlich so konfiguriert sind, dass während des gleichzeitigen Antriebs des ersten endlosen Förderbandes (11) und des zweiten endlosen Förderbandes (12) in der Kontaktzone (100) mehrere der ersten freien Stiftenden (61) gleichzeitig mit dem zweiten flexiblen Kunststoffmaterial (82) in Kontakt stehen, während mehrere der zweiten freien Stiftenden (62) gleichzeitig mit dem ersten flexiblen Kunststoffmaterial (81) in Kontakt stehen.

8. Vorrichtung nach einem der vorhergehenden Ansprüche, wobei das Quetschmittel wenigstens ein Quetschelement (14) umfasst, wobei sich das wenigstens eine Quetschelement in der Schälzone auf einer Seite von einem oder jedem des ersten und/oder des zweiten Förderbandes (11, 12) befindet, das vom Zwischenraum weg zeigt, um durch Drücken mit einem Druckbereich (30) des wenigstens einen Quetschelements (14) gegen das erste Förderband (11) und/oder das zweite Förderband (12) über das erste Förderband und/oder das zweite Förderband die Druckkraft auf die Garnele (2) in dem Zwischenraum, auszuüben.

9. Vorrichtung nach Anspruch 8, wobei zum Realisieren, dass sich die Druckkraft in der Quetschrichtung (21) bewegt, der Druckbereich (30) des wenigstens einen Quetschelements (14) an einer Seite, von der aus die Garnele (2) zugeführt wird, eine Begrenzungskante (31) aufweist, von der wenigstens ein Teil sowohl zur Quetschrichtung (21) als auch zur Transportrichtung (22) geneigt ist.

10. Vorrichtung nach einem der vorhergehenden Ansprüche, ferner umfassend Positioniermittel, die vor dem Ausüben der Druckkraft die zu schälenden Garnelen (2) auf dem ersten endlosen Förderband (11) so positionieren, dass der Rücken (5) der Garnele entlang einer Längskante des ersten endlosen Förderbandes liegt.

11. Vorrichtung nach einem der vorhergehenden Ansprüche, ferner umfassend wenigstens eine Schneidstation (60) zum Anbringen eines Einschnitts in dem Rücken (5) einer vor dem Ausüben der Druckkraft zu schälenden Garnele (2).

12. Verfahren zum mechanisierten Schälen von Garnelen, wobei eine solche Garnele (2) im Wesentlichen hufeisenförmig mit einem Kopf (3) und einem Schwanz (4) an den jeweiligen freien Enden der Hufeisenform gekrümmt ist, mit einem Rücken (5), der vom Kopf und vom Schwanz weg zeigt, und mit einer Unterseite und einer gegenüberliegenden Oberseite, die sich jeweils entlang der Hufeisenform erstrecken, und wobei ein angetriebenes erstes endloses Förderband (11) und ein zweites endloses Förderband (12), die gleichzeitig damit angetrieben werden, die Garnele in einer Transportrichtung (22) durch eine Schälzone einer Vorrichtung transportieren, während:
- sich die Garnele in einem Zwischenraum zwischen einer ersten Garnelenkontaktseite (41) des ersten endlosen Förderbandes und einer zweiten Garnelenkontaktseite (42) des zweiten endlosen Förderbandes befindet;
- die erste Garnelenkontaktseite einen ersten Reibungskontakt mit der Unterseite der Garnele herstellt und die zweite Garnelenkontaktseite einen zweiten Reibungskontakt mit der Oberseite der Garnele herstellt.
- Quetschmittel (14) über die erste Garnelenkontaktseite und die zweite Garnelenkontaktseite eine Druckkraft auf die in dem Zwischenraum befindliche Garnele ausüben, wobei sich die Druckkraft in einer Quetschrichtung (21) bewegt, die die Transportrichtung (22) kreuzt und sich vom Kopf und Schwanz der Garnele in Richtung des Rückens der Garnele erstreckt, so dass sich der Panzer (6) der Garnele auf der Rückseite öffnet und das Fleisch (7) der Garnele aus dem Panzer herausgequetscht wird;
**dadurch gekennzeichnet, dass**
- das erste endlose Förderband (11) wenigstens an seiner ersten Garnelenkontaktseite (41) aus einem ersten flexiblen Kunststoffmaterial (81) besteht und ein erstes Stiftbett aus ersten Stiften (51) umfasst, wobei das erste flexible Kunststoffmaterial (81) einen Elastizitätsmodul von weniger als 5 GPa aufweist, und wobei die ersten Stifte (51) aus Metall sind und wobei die ersten Stifte (51) wenigstens mit ihren ersten freien Stiftenden (61) an der ersten Garnelenkontaktseite des ersten endlosen Förderbandes hervorstehen, und wobei in dem Schälzustand mehrere der ersten freien Stiftenden gleichzeitig an der Unterseite der Garnele greifen; und/oder
- das zweite endlose Förderband (12) wenigstens an seiner zweiten Garnelenkontaktseite (42) aus einem zweiten flexiblen Kunststoffmaterial (82) besteht und ein zweites Stiftbett aus zweiten Stiften (52) umfasst, wobei das zweite flexible Kunststoffmaterial (82) einen Elastizitätsmodul von weniger als 5 GPa aufweist und wobei die zweiten Stifte (52) aus Metall sind und wobei die zweiten Stifte (52) wenigstens mit ihren zweiten freien Stiftenden (62) an der zweiten Garnelenkontaktseite des zweiten endlosen Förderbandes hervorstehen, und wobei in dem Schälzustand mehrere der zweiten freien Stiftenden gleichzeitig an der Oberseite der Garnele greifen.

## Revendications

1. Appareil (1) pour le décorticage mécanisé de crevettes, dans lequel une telle crevette (2) est incurvée selon une forme sensiblement de fer à cheval avec une tête (3) et une queue (4) au niveau des extrémités libres respectives de la forme de fer à cheval, avec un dos (5) tourné à l'opposé de la tête et de la queue, et avec un dessous et un côté supérieur opposé s'étendant chacun le long de la forme de fer à cheval, comprenant :
- une première bande de transport sans fin (11) et une seconde bande de transport sans fin (12), qui sont configurées pour transporter la crevette dans une direction de transport (22) à travers une zone de décorticage de l'appareil en entraînant simultanément la première bande de transport sans fin et la seconde bande de transport sans fin dans un état de décorticage de la crevette, alors que la crevette est située dans un espace intermédiaire entre un premier côté de mise en contact avec la crevette (41) de la première bande de transport sans fin et un second côté de mise en contact avec la crevette (42) de la seconde bande de transport sans fin, et alors que le premier côté de mise en contact avec la crevette établit un premier contact de frottement avec le dessous de la crevette et le second côté de mise en contact avec la crevette établit un second contact de frottement avec le côté supérieur de la crevette ; et
- un moyen de compression (14) pour réaliser que dans l'état de décorticage via le premier côté de mise en contact avec la crevette et le second côté de mise en contact avec la crevette est exercée une force de pressage sur la crevette située dans ledit espace intermédiaire, dans lequel ladite force de pressage se déplace dans une direction de compression (21), qui coupe la direction de transport (22), et qui s'étend depuis la tête et la queue de la crevette vers le dos de la crevette, de telle sorte que l'ossature (6) de la crevette s'ouvre sur le côté arrière et la chair (7) de la crevette est comprimée à l'extérieur de l'ossature ;
**caractérisé en ce que**
- la première bande de transport sans fin (11), au moins au niveau de son premier côté de mise en contact avec la crevette (41), est composée d'un premier matériau synthétique souple (81) et comprend un premier lit de broches constitué de premières broches (51), dans lequel le premier matériau synthétique souple (81) présente un module élastique inférieur à 5 GPa, et dans lequel les premières broches (51) sont composées de métal, et dans lequel les premières broches (51), au niveau de leurs premières extrémités de broche libres (61), font saillie au niveau du premier côté de mise en contact avec la crevette de la première bande de transport sans fin, et dans lequel dans ledit état de décorticage une multitude des premières extrémités de broche libres saisissent simultanément au niveau du dessous de la crevette pour réaliser ledit premier contact de frottement ; et/ou
- la seconde bande de transport sans fin (12), au moins au niveau de son second côté de mise en contact avec la crevette (42), est composée d'un second matériau synthétique souple (82) et comprend un second lit de broches constitué de secondes broches (52), dans lequel le second matériau synthétique souple (82) présente un module élastique inférieur à 5 GPa, et dans lequel les secondes broches (52) sont composées de métal, et dans lequel les secondes broches (52), au niveau de leurs secondes extrémités de broche libres (62), font saillie au niveau du second côté de mise en contact avec la crevette de la seconde bande de transport sans fin, et dans lequel dans ledit état de décorticage une multitude des secondes extrémités de broche libres saisissent simultanément au niveau du côté supérieur de la crevette pour réaliser ledit second contact de frottement.

2. Appareil selon la revendication 1, dans lequel le premier matériau synthétique souple (81) de la première bande de transport sans fin (11) présente un module élastique inférieur à 1 GPa, de préférence inférieur à 0,5 GPa, plus préférablement inférieur à 0,1 GPa, et/ou dans lequel le second matériau synthétique souple (82) de la seconde bande de transport sans fin (12) présente un module élastique inférieur à 1 GPa, de préférence inférieur à 0,5 GPa, plus préférablement inférieur à 0,1 GPa.

3. Appareil selon la revendication 1 ou 2, dans lequel les premières broches (51) sont composées d'un métal résistant à la corrosion, et/ou dans lequel les secondes broches (52) sont composées d'un métal résistant à la corrosion.

4. Appareil selon l'une quelconque des revendications précédentes, dans lequel les premières extrémités de broche libres (61) présentent des premières parties tranchantes (101) avec lesquelles les premières extrémités de broche libres saisissent au niveau du dessous de la crevette pour réaliser ledit premier contact de frottement, et/ou dans lequel les secondes extrémités de broche libres (62) présentent des secondes parties tranchantes avec lesquelles les secondes extrémités de broche libres saisissent au niveau du côté supérieur de la crevette pour réaliser ledit second contact de frottement.

5. Appareil selon l'une quelconque des revendications précédentes, dans lequel les premières extrémités de broche libres (61) sont des extrémités libres de premières pinces en forme de U (71) qui sont bloquées dans le premier matériau synthétique souple (81) de la première bande de transport sans fin (11), et/ou dans lequel les secondes extrémités de broche libres (62) sont des extrémités libres de secondes pinces en forme de U (72) qui sont bloquées dans le second matériau synthétique souple (82) de la seconde bande de transport sans fin (12).

6. Appareil selon l'une quelconque des revendications précédentes, dans lequel le moyen de compression (14) est adapté de telle sorte que dans l'état de décorticage de la crevette l'espace intermédiaire entre le premier côté de mise en contact avec la crevette (41) et le second côté de mise en contact avec la crevette (42) dans la direction de transport (22) rétrécit jusqu'à une zone de contact (100) de l'appareil (1), dans lequel dans la zone de contact le premier côté de mise en contact avec la crevette et le second côté de mise en contact avec la crevette sont en contact l'un avec l'autre.

7. Appareil selon la revendication 6, dans lequel :
- la première bande de transport sans fin (11) au moins au niveau de son premier côté de mise en contact avec la crevette (41) est composée dudit premier matériau synthétique souple (81), et comprend ledit premier lit de broches constitué desdites premières broches (51) avec leurs premières extrémités de broche libres (61) ; et
- la seconde bande de transport sans fin (12) au moins au niveau de son second côté de mise en contact avec la crevette (42) est composée dudit second matériau synthétique souple (82), et comprend ledit second lit de broches constitué desdites secondes broches (52) avec leurs secondes extrémités de broche libres (62) ; et
- la première bande de transport sans fin (11) et la seconde bande de transport sans fin (12) sont en plus configurées de telle sorte que, durant ledit entraînement simultané de la première bande de transport sans fin (11) et de la seconde bande de transport sans fin (12), dans ladite zone de contact (100) une multitude des premières extrémités de broche libres (61) sont simultanément en contact avec le second matériau synthétique souple (82), alors que simultanément une multitude des secondes extrémités de broche libres (62) sont simultanément en contact avec le premier matériau synthétique souple (81).

8. Appareil selon l'une quelconque des revendications précédentes, dans lequel le moyen de compression comprend au moins un élément de compression (14), dans lequel l'au moins un élément de compression est situé dans la zone de décorticage sur un côté de l'une ou de chacune de la première et/ou de la seconde bande de transport (11, 12) tourné à l'opposé de l'espace intermédiaire, pour exercer, par pressage avec une zone de pressage (30) de l'au moins un élément de compression (14) contre la première bande de transport (11) et/ou la seconde bande de transport (12), via la première bande de transport et/ou la seconde bande de transport ladite force de pressage sur la crevette (2) étant située dans ledit espace intermédiaire.

9. Appareil selon la revendication 8, dans lequel, pour réaliser ladite force de pressage se déplaçant dans la direction de compression (21), la zone de pressage (30) de l'au moins un élément de compression (14) au niveau d'un côté depuis lequel la crevette (1) est apportée possède un bord de délimitation (31) dont au moins une partie est inclinée par rapport à la direction de compression (21) et à la direction de transport (22).

10. Appareil selon l'une quelconque des revendications précédentes, comprenant en outre un moyen de positionnement qui, avant d'exercer ladite force de pressage, positionne la crevette (2) à décortiquer sur la première bande de transport sans fin (11) d'une manière telle que le dos (5) de la crevette repose le long d'un bord longitudinal de la première bande de transport sans fin.

11. Appareil selon l'une quelconque des revendications précédentes, comprenant en outre au moins un poste de découpe (60) pour appliquer une incision dans le dos (5) d'une crevette (2) à décortiquer avant d'exercer ladite force de pressage.

12. Procédé pour le décorticage mécanisé de crevettes, dans lequel une telle crevette (2) est incurvée selon une forme sensiblement de fer à cheval avec une tête (3) et une queue (4) au niveau des extrémités libres respectives de la forme de fer à cheval, avec un dos (5) tourné à l'opposé de la tête et de la queue, et avec un dessous et un côté supérieur opposé s'étendant chacun le long de la forme de fer à cheval, et dans lequel une première bande de transport sans fin entraînée (11) et une seconde bande de transport sans fin (12), simultanément entraînée avec celle-ci, transportent la crevette dans une direction de transport (22) à travers une zone de décorticage d'un appareil, alors que :
- la crevette est située dans un espace intermédiaire entre un premier côté de mise en contact avec la crevette (41) de la première bande de transport sans fin et un second côté de mise en contact avec la crevette (42) de la seconde bande de transport sans fin ;
- le premier côté de mise en contact avec la crevette établit un premier contact de frottement avec le dessous de la crevette et le second côté de mise en contact avec la crevette établit un second contact de frottement avec le côté supérieur de la crevette ;
- un moyen de compression (14) via le premier côté de mise en contact avec la crevette et le second côté de mise en contact avec la crevette exerce une force de pressage sur la crevette située dans ledit espace intermédiaire, dans lequel ladite force de pressage se déplace dans une direction de compression (21), qui coupe la direction de transport (22), et qui s'étend depuis la tête et la queue de la crevette vers le dos de la crevette, de telle sorte que l'ossature (6) de la crevette s'ouvre sur le côté arrière et la chair (7) de la crevette est comprimée à l'extérieur de l'ossature ;
**caractérisé en ce que**
- la première bande de transport sans fin (11), au moins au niveau de son premier côté de mise en contact avec la crevette (41), est composée d'un premier matériau synthétique souple (81) et comprend un premier lit de broches constitué de premières broches (51), dans lequel le premier matériau synthétique souple (81) présente un module élastique inférieur à 5 GPa, et dans lequel les premières broches (51) sont composées de métal, et dans lequel les premières broches (51), au niveau de leurs premières extrémités de broche libres (61), font saillie au niveau du premier côté de mise en contact avec la crevette de la première bande de transport sans fin, et dans lequel dans ledit état de décorticage une multitude des premières extrémités de broche libres saisissent simultanément au niveau du dessous de la crevette ; et/ou
- la seconde bande de transport sans fin (12), au moins au niveau de son second côté de mise en contact avec la crevette (42), est composée d'un second matériau synthétique souple (82) et comprend un second lit de broches constitué de secondes broches (52), dans lequel le second matériau synthétique souple (82) présente un module élastique inférieur à 5 GPa, et dans lequel les secondes broches (52) sont composées de métal, et dans lequel les secondes broches (52), au niveau de leurs secondes extrémités de broche libres (62), font saillie au niveau du second côté de mise en contact avec la crevette de la seconde bande de transport sans fin, et dans lequel dans ledit état de décorticage une multitude des secondes extrémités de broche libres saisissent simultanément au niveau du côté supérieur de la crevette.
